# EUROPÄISCHE PATENTSCHRIFT

(11) **EP 2 110 211 B1**
(45) Veröffentlichungstag und Bekanntmachung des Hinweises auf die Patenterteilung: **14.09.2011**
(21) Anmeldenummer: 09005207.7
(22) Anmeldetag: 09.04.2009
(51) Int. Cl.: B25J 9/00

(54) **Tragrahmen für Roboter**
Support frame for robots
Cadre de support pour robots

(30) Priorität: 18.04.2008 DE 102008019710
(43) Veröffentlichungstag der Anmeldung: 21.10.2009
(73) Patentinhaber: Multivac Sepp Haggenmüller GmbH & Co. KG, 87787 Wolfertschwenden (DE)
(72) Erfinder: Imhof, Peter, 88459 Tannheim (DE)
(74) Vertreter: Grünecker, Kinkeldey, Stockmair & Schwanhäusser Anwaltssozietät

(56) Entgegenhaltungen:
- EP-A2- 1 886 924
- DE-A1-102005 042 031

## Beschreibung

Die vorliegende Erfindung betrifft einen Tragrahmen für Roboter nach dem Oberbegriff des Anspruchs 1.

Zur Handhabung von Produkten, beispielsweise zu Verpackungszwecken und/oder zur Handhabung solcher Verpackungen, ist die Verwendung von Robotern bekannt. Um die Roboter beispielsweise über einer Förderstrecke positionieren zu können, sind entsprechende Konstruktionselemente, wie z.B. Tragrahmen erforderlich. Da die Handhabung der Produkte und/oder deren Verpackungen zum Teil mit sehr hoher Geschwindigkeit abläuft, beispielsweise mit bis deutlich über 100 Produktversetzungen pro Minute, wirken auf die Konstruktion des Tragrahmens sehr hohe Beschleunigungskräfte von bis zu 10g (g=Erdbeschleunigung) und zum Teil noch darüber.

Zusätzlich belastend wirken sich die zum Teil hohen Gewichtskräfte der zu handhabenden Produkte auf die Konstruktion des Tragrahmens aus, so dass dieser möglichst stabil ausgebildet sein muss, um Schwingungen aus dem System möglichst fern zu halten und dadurch eine genaue Positionierung der Greifelemente des Roboters zu ermöglichen.

Um hohe mechanische Stabilitäten für den Tragrahmen erreichen zu können, ist es handelsüblich bekannt, Profilrohre zu dessen Aufbau zu verwenden.

Insbesondere in hygienisch kritischen Anwendungsbereichen, wie z.B. bei der Handhabung von Lebensmitteln, Pharmazeutika, medizintechnische Produkte und/oder deren Verpackungen werden immer höhere Hygieneanforderungen an die handhabenden Vorrichtungen gestellt, deren Einhaltung mit bisher bekannten Rahmenkonstruktionen zum Teil nur schwer möglich sind.

Ein Tragrahmen für einen Roboter, der jedoch nicht für besonders hygienekritische Anwendungsbereiche ausgelegt ist, geht aus der DE 10 2005 042 031 A1 hervor.

Die EP 1 886 924 A2 offenbart einen Tragrahmen zun Einsatz in hygienisch Kritischen Anwendungsbereichen, wobei der Tragrahnen aus einen in Wesentlichen offenen Rahnenprofil ausgebildet ist, wobei der Tragrahmen eine zwei beabstandet nebeneinander angeordrete Seitenelemente umfassende Seitenkonstrktion aufweist, und wobei die beiden Seitenelemente mittels Verbindurgslaschen miteinander verburden sind.

Aufgabe der vorliegenden Erfindung ist es, einen Tragrahmen entsprechend des einleitend dargelegten Standes der Technik vorzuschlagen, der den zunehmenden Hygieneanforderungen besser genügt.

Diese Aufgabe wird, ausgehend von einem Tragrahmen entsprechend des Oberbegriffs des Anspruchs 1, durch dessen kennzeichnende Merkmale gelöst.

Dementsprechend zeichnet sich ein erfindungsgemäßer Tragrahmen dadurch aus, dass die Verbindurgstege und/oder Verbindurgslaschen in Ausnehmungen der Seitenelemente eingesetzt sind.

Ein offenes Rahmenprofil hat den Vorteil, dass einerseits Hohlräume in der Konstruktion vermieden werden, in welchen sich Schmutz ansammeln kann, und andererseits eine bessere Zugänglichkeit der Tragelemente durch die offene Bauweise möglich ist, insbesondere zu Reinigungs- und/oder Kontrollzwecken. Durch die wenigstens abschnittsweise zwei beabstandet nebeneinander angeordnete Seitenelemente umfassende Seitenkonstruktion ergibt sich für die betreffende Seite des Tragrahmens eine doppelte Tragefunktion, so dass sich die in den Tragrahmen eingeleiten Kräfte in vorteilhafter Weise auf beide Seitenelemente verteilen.

Durch das Vorsehen von Verbindungsstegen und/oder Verbindungslaschen zwischen diesen beiden Seitenelementen wird deren mechanische Stabilität deutlich erhöht, ohne dass ein geschlossenes Profil erforderlich ist. Solche Verbindungsstege bzw. Verbindungslaschen können beispielsweise aus einem verhältnismäßig schmalen, flachen Material bestehen, wie z.B. aus einem Stück Blech und können, je nach Anforderungen an die mechanische Stabilität des Tragrahmens in größeren oder kleineren Abständen zueinander die beiden Seitenelemente mit einander verbinden. Auch an solchen Verbindungsstellen kann der erfindungsgemäße Tragrahmen aber immer noch offen ausgebildet werden, da bis auf diesen Verbindungssteg der Rest dieses Tragrahmenbereichs sowohl von seiner Rückseite her als auch von den dem Verbindungssteg benachbarten Bereichen von der Vorderseite her, unverschlossen und somit sehr gut zugänglich ist.

Da die Verbindungsstege und/oder Verbindungslaschen in Ausnehmungen der Seitenelemente eingesetzt werden, ist das Rahmenprofil im Wesentlichen frei von lokalen Erhebungen an Kanten und/oder Oberflächen ausgebildet. Dies wirkt sich zum Einen hinsichtlich einer reduzierten Verschmutzungsanfälligkeit positiv aus, da dadurch keine vorstehenden Kanten oder Flächen am Tragrahmen ausgebildet sind, an denen sich Schmutz ablagern könnte. Weiterhin wirkt es sich aber auch positiv hinsichtlich der Reinigung aus, da aufgetragene Reinigungsflüssigkeit über die glatten Oberflächen und Kanten des Tragrahmens gut ablaufen kann.

Die Verbindungsstege und/oder Verbindungslaschen können zusätzlich Befestigungselemente aufweisen, z.B. in der Form von aus ihnen heraus getrennten und davon abgebogenen Laschen, mit ggf. daran angeordneten Befestigungslöchern und/oder - schlitzen. Aber auch in den Seitenelementen ist die Ausbildung solcher Befestigungselemente grundsätzlich möglich, ggf. auch in einem Profilraster, um so verschiedene Positioniermöglichkeiten für den Roboter und/oder ihm zugehörige und/oder mit ihm zusammenwirkende, weitere Komponenten zur Verfügung stellen zu können.

In den Verbindungsstegen können auch längliche Schlitze ausgebildet sein, die entweder zu verbesserten Reinigungs- und/oder Kontrollzwecken genutzt werden können, oder aber auch als Aufnahmeelement, zur Fixierung weiterer Maschinenkomponenten mit variabler Positioniermöglichkeit.

Eine weitere Verbesserung der mechanischen Festigkeit bei gleichzeitig guter Kontroll- und/oder Reinigungseigenschaft durch ein offenes Profil können die beiden Seitenelemente zusammen mit einem Verbindungssteg zumindest abschnittsweise im Querschnitt ein "U"- oder "C"-Profil ausbilden, vorzugsweise in einem im Wesentlichen vertikal oder zur Horizontalen geneigt verlaufenden Abschnitt.

Neben den im Wesentlichen von lokalen Erhebungen freien Konturen ist es vorteilhaft wenn die einzelnen Elemente des Tragrahmens selbst vergleichsweise glatte Oberflächen aufweisen, so dass sich einerseits wiederum möglichst wenig Schmutz daran ablagern und andererseits Reinigungsflüssigkeit gut ablaufen kann. Diese vorteilhaften hygienischen Eigenschaften können für den erfindungsgemäßen Tragrahmen dadurch weiter verbessert werden, dass alle flächigen Bereiche des Rahmenprofils gegenüber der Horizontalen geneigt oder vertikal ausgebildet sind. In besonders vorteilhafter Weise können sogar die Kanten der einzelnen Tragrahmenelemente entsprechend geneigte Flächenbereiche aufweisen.

Eine weitere Verbesserung der Stabilität bei gleichzeitig reduziertem Gewicht kann dem erfindungsgemäßen Tragrahmen durch das Vorsehen von fachwerkartig angeordneten Streben und/oder Aussparungen an verschiedenen Elementen des Tragrahmens, insbesondere an dessen Seitenelementen verliehen werden.

Weiter vorteilhaft, sowohl hinsichtlich der Stabilität und der Gewichtsreduzierung des Tragrahmens als auch hinsichtlich einer Anordnungsmöglichkeit eines vom Tragrahmen getragenen Roboters, z.B. im Bezug auf eine Transportvorrichtung für die zu handhabenden Produkte, kann die Ausbildung eines Portals sein, insbesondere im Bereich eines Seitenelementes. Damit ist es möglich, den Tragrahmen über eine Förderstrecke zu stellen, von welcher der Roboter die zu handhabenden Produkte entnimmt und an einer anderen Stelle ablegt, oder umgekehrt. Diese andere Stelle kann z.B. ebenfalls eine entsprechende Förderanlage sein, die beispielsweise parallel zur ersten angeordnet ist, und/oder eine Sammelstelle, die beispielsweise am Ende oder neben einer solchen Förderstrecke liegt, oder der gleichen mehr.

In weiter vorteilhafter Weise kann an einem Seitenelement eine Längsstrebe vorgesehen sein, z.B. im Bereich des oben beschriebenen Portals. Dadurch können am Portal ausgebildete, fußartige Rahmenelemente die mechanische Stabilität des Tragrahmens verbessernd miteinander verbunden werden, ggf. unterhalb einer Förderebene für vom Roboter zu handhabende Produkte. Die Längsstreben können, wie im Übrigen auch alle anderen Elemente, mit den Seitenelementen z.B. verschweißt werden, vorzugsweise mit durchgehender Schweißnaht, so dass keine schmutzaufnehmenden Kavitäten entstehen können. Die Verbindung kann aber auch als Schraubverbindung ausgebildet sein, so dass die Längsstreben z.B. zu Montage- und/oder wartungszwecken besser zu handhaben sind.

Im Weiteren kann der Tragrahmen eine zweite Seitenkonstruktion aufweisen, wie oben bereits beschrieben, welche vorzugsweise mit Querstreben mit der ersten verbunden ist, die vorzugsweise ebenfalls gegenüber der Horizontalen geneigt oder vertikal ausgebildet sind. Hierdurch kann eine freistehende Tragrahmenkonstruktion erzielt werden, die bei sehr guten hygienischen Eigenschaften aufgrund des offenen Rahmenprofils trotzdem eine sehr hohe mechanische Stabilität durch die jeweils doppelten Seitenelementen und die sie verbindenden Verbindungsstege bzw. Verbindungslaschen sowie Längsstreben und Querstreben aufweist, und, nicht zu vergessen, durch die fachwerkartigen Elemente und das Portalelement.

Die Querstreben können, wie die Verbindungsstege und/oder Verbindungslaschen, in an den Seitenelementen ausgebildeten Ausnehmungen angeordnet sein und so vorzugsweise ebenfalls einen glatten Konturübergang an der Verbindungsstelle ermöglichen, wie oben bereits beschrieben. Ein weiterer Vorteil dieser in das Rahmenprofil hinein eingesetzten Anordnung der Querstreben liegt in einer dadurch erzielbaren, vorzugsweise ebenen Oberfläche, von der zumindest bereichsweise keine Elemente vom Rahmen vorstehen und dadurch einerseits eine Verletzungsgefahr reduziert wird und andererseits die Möglichkeit gegeben ist ggf. weitere Maschinenelemente möglichst flächig am Rahmen befestigen zu können.

Insbesondere vorteilhaft für eine solche zusätzliche Geräteanordnung, z.B. für das Vorsehen eines Schaltschrank oder der gleiche, kann es sein, wenn die Querstreben zwischen den Seitenelementen angeordnet sind. Dadurch können z.B. Fixierpunkte an den Seitenelementen im Grunde frei gewählt werden.

Ausführungsbeispiele der Erfindung sind in den Zeichnungen dargestellt und werden nachfolgend anhand der beigefügten Figuren näher erläutert.

Im Einzelnen zeigen:
Fig. 1 und 2 jeweils beispielhaft einen Tragrahmen für einen Roboter in perspektivischer Ansicht aus unterschiedlichen Blickwinkeln und in unterschiedlichen Ausführungsformen,
Fig. 3 eine vergrößerte, ausschnittsweise Darstellung eines Tragrahmens entsprechend der Linien III in Blickrichtung des Pfeiles III in der Fig. 2,
Fig. 4 eine Darstellung entsprechend der Fig. 2 mit weiteren Rahmenelementen und am Rahmen fixierten Roboter, und
Fig. 5 den Rahmen mit daran befestigtem Roboter entsprechend der Fig. 4 in Frontalansicht.

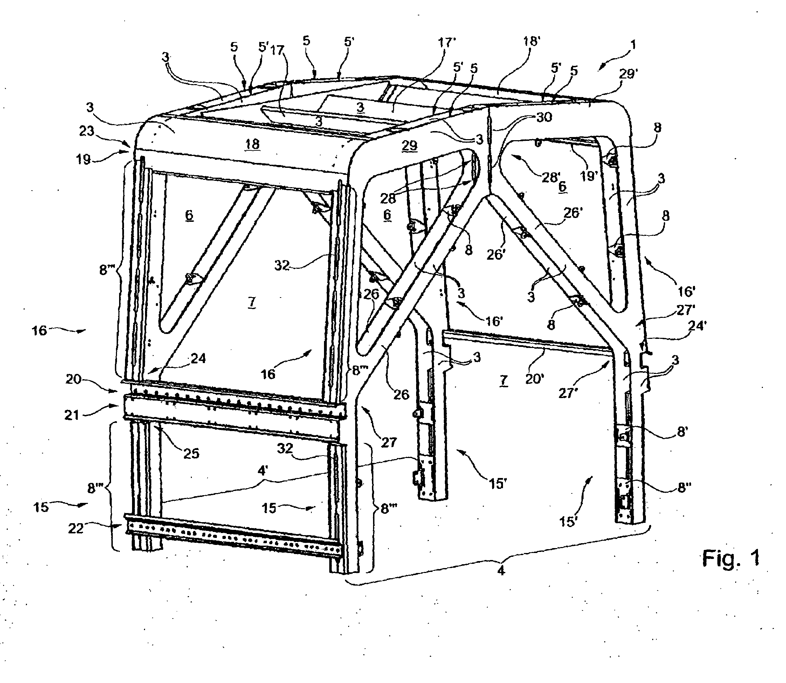

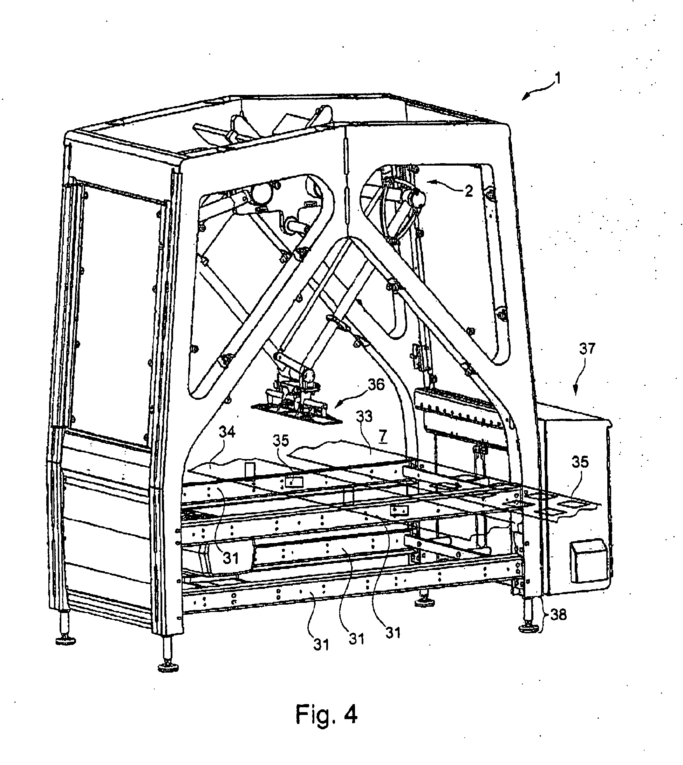

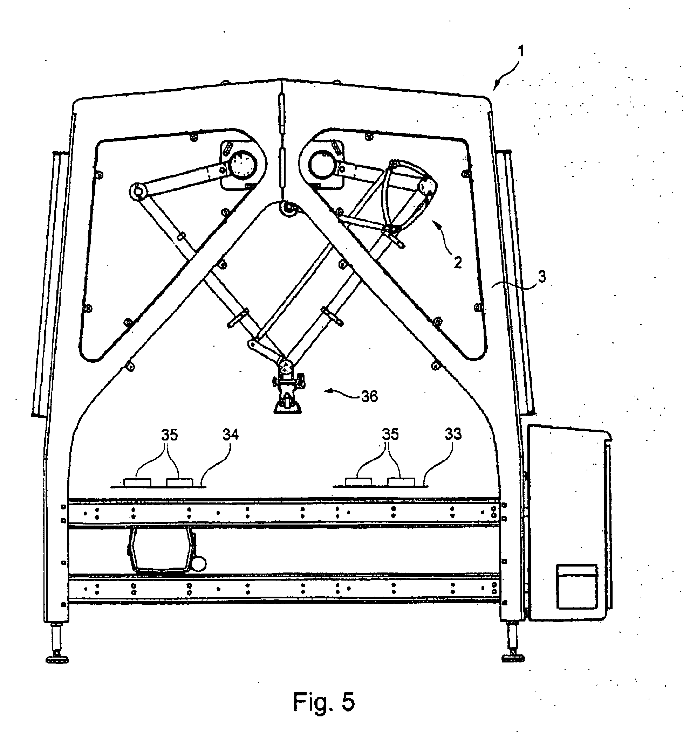

Dementsprechend zeigt die Fig. 1 einen Tragrahmen 1 für einen Roboter 2 (siehe Fig. 4 und 5), der insbesondere zum Einsatz in hygienisch kritischen Anwendungsbereichen vorgesehen ist. Dieser Tragrahmen zeichnet sich dadurch aus, dass er aus einem im Wesentlichen offenen Rahmenprofil 3 ausgebildet ist. Diese offene Rahmenkonstruktion wird in erster Linie dadurch erreicht, dass eine Seitenkonstruktion 4 des Tragrahmens aus zwei beabstandeten nebeneinander angeordneten Seitenelementen 5, 5' aufgebaut ist, die jeweils flächig ausgebildet sind und im Wesentlichen nur senkrecht und/oder gegenüber der Horizontalen stark geneigt ausgerichtete Rahmenprofilelemente 3 umfassen.

Zur Reduzierung des Gewichts des Tragrahmens sowie zu dessen besseren Handhabbarkeit und Einsetzbarkeit sind in der flächigen Erstreckung der Seitenelemente 5, 5' Öffnungen oder Aussparungen 6, 7 ausgebildet. Diese Öffnungen oder Aussparungen ermöglichen das Durchführen von Maschinenelementen, wie z.B. für einer Förderanlage oder der gleichen durch die Rahmenkonstruktion, so dass ein am Tragrahmen befestigter Roboter eine Zugriffsmöglichkeit auf die Fördereinrichtung und auf mit ihr transportierte Produkte hat.

Zur Erhöhung der Stabilität der Seitenkonstruktion 4 sind die beiden Seitenelemente 5, 5' mittels Verbindungsstegen und/oder Verbindungslaschen 8, 8', 8", 8"' und 8"" partiell so miteinander verbunden, dass das Rahmenprofil trotzdem von allen Seiten zugänglich und somit offen ausgebildet bleibt.

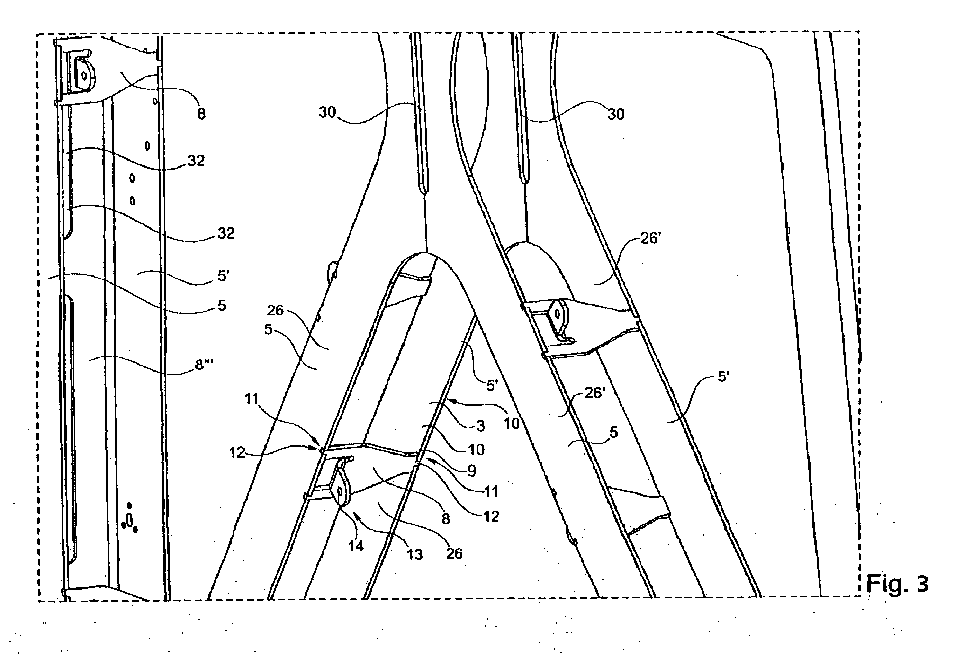

Um das Rahmenprofil im Wesentlichen frei von lokalen Erhebungen an Kanten 9 und Oberflächen 10 ausbilden zu können, sind die Verbindungsstege und/oder Verbindungslaschen 8 in entsprechenden Ausnehmungen 11 der Seitenelemente 5 eingesetzt, z.B. mit fingerartigen Vorsprüngen 12 (Fig. 3).

Um eine Möglichkeit zur Befestigung von Maschinenelementen am Tragrahmen zu Verfügung stellen zu können, können an diesen entsprechende Befestigungselemente 13 vorgesehen werden. In der hier dargestellten Ausführungsform wird ebenfalls im Sinne der Bereitstellung eines im Wesentlichen offenen Rahmenprofils eine Lasche 13 aus dem Verbindungssteg und/oder der Verbindungslasche 8 flügelartig ausgeschnitten, umgebogen und mit einer Öffnung 14 zur Aufnahme eines weiteren Fixierelementes, z.B. einer Schraube oder der gleichen versehen. Die Verbindungsstege und/oder Verbindungslaschen 8 haben in einer möglichen Ausführungsform, hier beispielhaft, eine etwa dreieckige Kontur mit abgeschnitten bzw. verdickt ausgebildeten Ecken, wobei an der die Befestigungslasche 13 aufweisenden Seite 2 etwa fingerartig vorstehende Vorsprünge 12 mit dem Seitenelement 5 verbunden sind und das gegenüberliegende Ende eine einzelne Verbindung mit dem Seitenelement 5- aufweist. Durch diese Dreiecksverbindung zwischen den beiden Seitenelementen 5, 5' kann die ohnehin durch die Verbindung an sich bereits erhöhte Konstruktionssteifigkeit der Seitenkonstruktion 4 noch weiter gesteigert werden, insbesondere gegenüber schräg eingeleiteten Kräften, wie sie beispielsweise bei der Beschleunigung eines Roboterarm auftreten können.

Um das Rahmenprofil 3 noch zusätzlich verstärken zu können, können in der hier beispielhaft dargestellten Ausführungsform die beiden Seitenelemente 5, 5' so mit einem Verbindungssteg 8"' bzw. 8"" verbunden werden, dass sie im Querschnitt ein "U"- oder "C"- Profil ausbilden. Insbesondere vorteilhaft ist eine solche Verbindung über einen längeren Abschnitt des Rahmenprofils vorzusehen. Besonders bevorzugt bietet sich im Hinblick einer guten Hygienetauglichkeit der Bereich des Tragrahmens an, an welchem vertikal oder gegenüber der Horizontalen geneigt ausgebildete Abschnitte am Rahmenprofil vorliegen, wie dies z.B. bei fuß- oder säulenartigen Elementen 15, 16 des Tragrahmens der Fall ist.

Grundsätzlich ist es vorteilhaft, wenn im Wesentlichen alle flächigen Bereiche des Rahmenprofils gegenüber der Horizontalen geneigt oder vertikal ausgebildet sind, so dass sich einerseits auf der besonders bevorzugten glatt ausgebildeten Oberfläche, sowohl der Flächen als auch der ihnen zugehörigen Kanten, von vorneherein bereits wenig Möglichkeit zur Ablagerung von Schmutz bietet, und andererseits ein leichtes Abspülen und anschließendes Ablaufen von Reinigungsflüssigkeit gewährleistet werden kann. Hierzu gehören insbesondere auch Querstreben 17 bis 22, die zur Ausbildung des Tragrahmens 1 eine erste Seitenkonstruktion 4 mit einer im Wesentlichen parallel hierzu angeordneten zweiten Seitenkonstruktion 4' miteinander verbinden.

In der Fig. 1 sind insbesondere die Querstreben 19 bis 22 stirnseitig außen an entsprechenden Vertiefungen der Seitenelemente 5, 5' derart eingesetzt, dass im Wesentlichen kein gegenüber der Außenkontur vorstehender Bereich ausgebildet wird. Durch verschweißen mit einer durchgehenden Schweißnaht der Querstreben mit den ihnen zugeordneten Flächen der betreffenden Ausnehmungen in den beiden Seitenelementen 5, 5' kann einerseits gewährleistet werden, dass keine schmutzaufnehmenden Kavitäten ausgebildet werden, und andererseits zusätzlich eine weitere Erhöhung der Steifigkeit des Tragrahmens bei gleichzeitig vorteilhaften hygienischen Eigenschaften aufgrund der weiterhin offenen Bauweise des Rahmenprofils erzielt werden kann.

Zur weiteren Erhöhung der mechanischen Festigkeit bei gleichzeitiger offener Bauweise des Profilrahmens 3 kann entsprechend der hier gezeigten, beispielhaften Ausführungsform am Seitenelement 5 eine fachwerkartig ausgebildete Strebe 26 und/oder eine fachwerkartige Aussparung 6,7 vorgesehen sein. Die im Wesentlichen zur Horizontalen schräg verlaufend angeordneten, fachwerkartigen Streben laufen hier beispielhaft von der Mitte des oberen Bereichs des Seitenelementes 5 schräg nach unten und außen zu einem Bereich des Tragrahmens 1, der diesen im Wesentlichen nach oben hin abstützt.

Die diesbezügliche Verbindungsstelle 27 liegt bevorzugt in einem Ubergangsbereich zwischen dem fußartigen Element 15 des Tragrahmens 1 und dem an ihm nach oben anschließenden, vorzugsweise in einer stark geneigten Anordnung ausgebildeten, säulenartigen Aufsatz 16. Hierdurch können die fachwerkartig ausgebildeten Aussparungen oder Öffnungen 6 im Wesentlichen als etwa gleichschenkelige Dreiecke mit vorzugsweise abgerundeten Ecken ausgebildet werden, was sowohl in vertikaler als auch in horizontaler Richtung des Tragrahmens eine hohe mechanische Festigkeit bewirkt. Denkbar sind aber auch andere geometrische Konturen mit Streben 26 und der Öffnungen bzw. Aussparungen 6, sowie der beiden fuß- und säulenartigen Elemente 15 und 16 und der den dritten Schenkel des Dreieck ausbildenden Kopfstrebe 29. Diese Kopfstrebe 29 verläuft im oberen Bereich von der Mitte des Seitenelementes 5, gegenüber der Horizontalen geneigt, nach außen hin zum säulenartigen Stützelement 16 des Tragrahmens 1.

Sowohl die Kopfstrebe 29 als auch die fachwerkartige Strebe 26 stoßen oben in der Mitte des Tragrahmens 1 mit entsprechend komplementär ausgebildeten, zweiten Elementen des jeweiligen Seitenelementes 5 so zusammen, dass das ganze Seitenelement 5 in einer bevorzugten Ausführungsform spiegelsyrnmetrisch in zwei Hälften geteilt ist. Im Stoßbereich dieser beiden Hälften, der sich ausgehend von der Oberkante des Seitenelementes 5 über einen längeren Abschnitt nach unten hin erstreckt, können Öffnungen ausgebildet sein, vorzugsweise in der Form von Schlitzen. Diese ermöglichen eine weitere Verbesserung der hygienischen Eigenschaften des so aufgebauten Tragrahmens dadurch, dass einerseits eine Sichtkontrolle möglich ist und andererseits ein Eintrag von Reinigungsmitteln, insbesondere Reinigungsfluiden, die neben Flüssigkeiten auch gasförmige Medien und/oder Gemische daraus umfassen können. Ein weiterer Vorteil liegt in einem geringeren Verzug des Materials auf Grund verkürzter Schweißnahtlängen.

Die beiden schräg verlaufenden Streben 26, 26' bilden zusammen mit den nach unten hin anschließenden Abschnitten des den Tragrahmen vertikal abstützenden Teils des Rahmenprofils 3 die Umrandung eines portalartig ausgebildeten Ausschnittes 7, durch welchen z.B. eine Fördervorrichtung für zu handhabende Produkte verlaufen kann, wie schematisch in der Fig. 4 dargestellt.

Zur Aufnahme von Längsstreben 31 zwischen den fußartig ausgebildeten Stützelementen 15, 15' können am letzteren beispielsweise Verbindungsstege und/oder Verbindungslaschen 8', 8" vorgesehen sein. Hierdurch ist insbesondere hinsichtlich erhöhter Montage und/oder Wartungsfreundlichkeit eine lösbare Verbindung zwischen den jeweiligen Elementen möglich. Anstelle dessen ist durchaus aber auch ein Verschweißen solcher Längsstreben mit vorzugsweise durchgehenden Schweißnähten denkbar, so dass möglichst keine schmutzsammelnden Kavitäten gebildet werden.

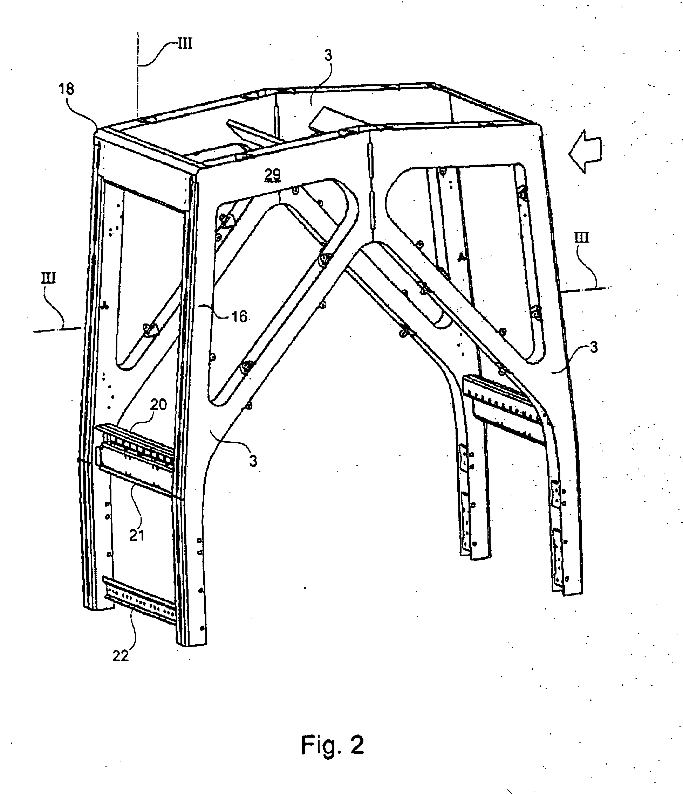

Die Fig. 2 zeigt eine gegenüber der Fig. 1 leicht abgewandelte Ausführungsform eines Tragrahmens für einen Roboter. Zum einen sind darin die Querstreben 20 bis 22 zwischen den beiden Seitenkonstruktionen 4, 4' angeordnet, und die Außenkonturen 5, 5' sind ohne entsprechend komplementäre Ausnehmungen zu deren Fixierung an der Außenseite ausgebildet. Die Querstrebe 18 weist in dieser Ausführungsform zwar eine immer noch abgerundete, ihm Vergleich zu Fig. 1 jedoch deutlich eckiger ausgebildete Übergangskontur zwischen der Kopfstrebe 29 und der säulenartigen Stütze 16 auf.

Fig. 3 ist eine vergrößerte, ausschnittsweise Ansicht auf Elemente des Tragrahmens entsprechend der Linien III und des Pfeiles III in der Fig. 2. Hierin ist insbesondere gut die offene Bauweise des Rahmenprofils 3 in der Form der beiden nebeneinander angeordneten Seitenelemente 5, 5' erkennbar. Gleiches gilt für deren mechanische Verbindung durch die Verbindungsstege und/oder Verbindungslaschen 8 und den im Wesentlichen ohne lokale Erhöhung an der Oberfläche oder den Kanten ausgebildeten Verbindungsbereich zwischen den fingerartigen Anschlusselementen 12 und den komplimentären, sie aufnehmenden Ausnehmungen 11. Durch eine im Längsverlauf der Strebe 26 abwechselnd an der Oberseite und an der Unterseite vorgesehene Anordnung von Verbindungsstegen und/oder Verbindungslaschen 8 bleibt das damit gebildete Rahmenprofil trotzdem im Wesentlichen immer noch offen ausgebildet und wird somit auch höchsten hygienischen Anforderungen gerecht.

Gleiches gilt auch für das im Querschnitt "C"- bzw. "U"-Profil der fuß- bzw. säulenartigen Elemente 15, 16, von denen in der Fig. 3 das Element 16 dargestellt ist und länglich verlaufende Schlitze 32 aufweist. Diese sind im die beiden Seitenelemente 5,5' verbindenden Verbindungssteg 8 ausgebildet und ermöglichen auch von außen eine gute Zugänglichkeit, sowohl hinsichtlich einer optischen Überprüfung als auch hinsichtlich einer Reinigung durch Zufuhr entsprechender Medien ins Innere des Rahmenprofils, welches von der gegenüberliegenden Seite mit Ausnahme der darin partiell angeordneten Verbindungsstege 8 vollkommen offen ist.

Die Fig. 4 zeigt einen Tragrahmen 1 mit daran befestigtem Roboter 2 und beispielhaft durch die portalartige Öffnung 7 geführte Transportvorrichtungen 33, 34. Eine Handhabevorrichtung 36 des Roboters 2 ist dazu vorgesehen, die auf der Transportvorrichtung 34 zugeführten, zu handhabenden Produkte 35 auf die Transportvorrichtung 33 umzupositionieren. Dies kann beispielsweise unter Vorgabe bestimmter Kriterien erfolgen, z.B. durch Sortierung und/oder Ausrichtung von ggf. in wahlloser Anordnung auf der Transportvorrichtung 34 zugeführten und auf der Transportvorrichtung 33 geordnet abzuführender Produkte 35.

Rein beispielhaft und schematisch ist im Weiteren noch ein Schaltschrank 37 zur Anordnung entsprechender Steuer- und/oder Regelkomponenten sowie zur Energieversorgung vorgesehen.

Zur optimalen Abstützung des Tragrahmens 1 auf dem Boden mit Niveauausgleich sind an der Unterseite des fußartigen Rahmenabschnittes 15 längenvariable Füße 38 vorgesehen, und ggf. am Boden verankert.

Die Fig. 5 zeigt schließlich noch eine Frontalansicht des Tragrahmens 1 mit daran befestigtem Roboter 2. Darin sind in entsprechend zur Darstellung der Fig. 4 zwei Transportvorrichtungen 33, 34 schematisch gezeigt, auf denen durch die Handhabungsvorrichtung 36 des Roboter 2 zu handhabende Produkte 35 umpositioniert werden.

### Bezugszeichenliste:

- 1: Tragrahmen
- 2: Roboter
- 3: Rahmenprofil
- 4: Seitenkonstruktion
- 5: Seitenelement
- 6: Öffnung/Aussparung
- 7: Öffnung/Aussparung
- 8: Verbindungssteg und/oder -Laschen
- 9: Kante
- 10: Oberfläche
- 11: Ausnehmung
- 12: Vorsprung
- 13: Befestigungselement
- 14: Öffnung
- 15: Fuß
- 16: Säule
- 17: Querstreben
- 18: Querstreben
- 19: Querstreben
- 20: Querstreben
- 21: Querstreben
- 22: Querstreben
- 23: Ausnehmung
- 24: Ausnehmung
- 25: Ausnehmung
- 26: Strebe
- 27: Verbindung
- 28: Verbindung
- 29: Kopfstrebe
- 30: Öffnung
- 31: Längsstrebe
- 32: Schlitz
- 33: Transportvorrichtung
- 34: Transportvorrichtung
- 35: Produkt
- 36: Handhabevorrichtung
- 37: Schaltschrank
- 38: Fuß

## Patentansprüche

1. Tragrahmen (1) für Roboter (2), insbesondere zum Einsatz in hygienisch kritischen Anwendungsbereichen, wie z. B. bei der Handhabung von Lebensmitteln, Pharmazeutika, medizintechnischen Produkte und/oder deren Verpackungen,
wobei der Tragrahmen (1) aus einem im Wesentlichen offenen, höchstens partiell geschlossenen Rahmenprofil (3) ausgebildet ist,
wobei der Tragrahmen eine wenigstens abschnittsweise zwei beabstandet nebeneinander angeordnete Seitenelemente (5, 5') umfassende Seitenkonstruktion (4) aufweist,
und wobei die beiden Seitenelemente (5, 5') mittels Verbindungsstegen und/oder Verbindungslaschen (8) miteinander verbunden sind,
**dadurch gekennzeichnet, dass** die Verbindungsstege und/oder Verbindungslaschen (8) in Ausnehmungen (11) der Seitenelemente eingesetzt sind.

2. Tragrahmen nach Anspruch 1, **dadurch gekennzeichnet, dass** an den Verbindungsstegen und/oder Verbindungslaschen (8) Befestigungselemente (13) ausgebildet sind.

3. Tragrahmen nach einem der vorangehenden Ansprüche, **dadurch gekennzeichnet, dass** in einem Verbindungssteg (8) längliche Schlitze (32) ausgebildet sind.

4. Tragrahmen nach einem der vorangehenden Ansprüche, **dadurch gekennzeichnet, dass** das Rahmenprofil (3) im Wesentlichen frei von lokalen Erhebungen ausgebildete Kanten (9) und/oder Oberflächen (10) aufweist.

5. Tragrahmen nach einem der vorangehenden Ansprüche, **dadurch gekennzeichnet, dass** im Wesentlichen alle flächigen Bereiche des Rahmenprofils (3) gegenüber der Horizontalen geneigt oder vertikal ausgebildet sind.

6. Tragrahmen nach einem der vorangehenden Ansprüche, **dadurch gekennzeichnet, dass** die Seitenelemente (5, 5') fachwerkartig angeordnete Streben (26) und/oder Aussparungen (6, 7) aufweisen.

7. Tragrahmen nach einem der vorangehenden Ansprüche, **dadurch gekennzeichnet, dass** eine Aussparung (7) des Seitenelementes (5) ein Portal ausbildet.

8. Tragrahmen nach einem der vorangehenden Ansprüche, **dadurch gekennzeichnet, dass** wenigstens an einem Seitenelement (5) wenigstens eine Längsstrebe (31) vorgesehen ist.

9. Tragrahmen nach einem der vorangehenden Ansprüche, **dadurch gekennzeichnet, dass** der Tragrahmen (1) zwei mittels Querstreben (17) miteinander verbundene Seitenkonstruktionen (4) umfasst.

10. Tragrahmen nach Anspruch 9, **dadurch gekennzeichnet, dass** die Querstreben (17) gegenüber der Horizontalen geneigt oder vertikal ausgebildet bzw. angeordnet sind.

11. Tragrahmen nach einem der Ansprüche 9 oder 10, **dadurch gekennzeichnet, dass** die Querstreben (19 bis 21) in an den Seitenelementen (5, 5') ausgebildeten Ausnehmungen (23 bis 25) angeordnet sind.

12. Tragrahmen nach einem der Ansprüche 9 bis 11, **dadurch gekennzeichnet, dass** die Querstreben (17 bis 22) zwischen den Seitenelementen (5, 5') angeordnet sind.

## Claims

1. A support frame (1) for robots (2), in particular for use in hygiene-critical application sectors, for example in the handling of foodstuffs, pharmaceuticals, medical equipment products and/or their packagings,
wherein the support frame (1) is formed from a substantially open, at most partly closed, frame profile (3),
wherein the support frame (1) has a side structure (4) comprising at least in sections two side elements (5,5') arranged spaced apart from and adjacent one another,
and wherein the two side elements (5,5') are joined together by means of connecting webs and/or connecting links (8),
**characterised in that** the connecting webs and/or connecting links (8) are inserted into recesses (11) of the side elements.

2. A support frame according to Claim 1, **characterised in that** fastening elements (13) are formed on the connecting webs and/or connecting links (8).

3. A support frame according to any one of the preceding Claims, **characterised in that** elongate slots (32) are formed in a connecting web (8).

4. A support frame according to any one of the preceding Claims, **characterised in that** the frame profile (3) has edges (9) and/or surfaces (10) formed substantially free of locally raised areas.

5. A support frame according to any one of the preceding Claims, **characterised in that** substantially all planar zones of the frame profile (3) are inclined in relation to the horizontal or are vertically formed.

6. A support frame according to any one of the preceding Claims, **characterised in that** the side elements (5,5') have struts (26) and/or cut-outs (6,7) arranged in the manner of a framework.

7. A support frame according to any one of the preceding Claims, **characterised in that** a cut-out (7) of the side element (5) forms a portal.

8. A support frame according to any one of the preceding Claims, **characterised in that** at least one longitudinal strut (31) is provided at least on one side element (5).

9. A support frame according to any one of the preceding Claims, **characterised in that** the support frame (1) comprises two side structures (4) joined together by means of cross-members (17).

10. A support frame according to Claim 9, **characterised in that** the cross-members (17) are formed or arranged inclined or vertical in relation to the horizontal.

11. A support frame according to Claim 9 or 10, **characterised in that** the cross-members (19 to 21 ) are arranged in cut-outs (23 to 25) formed on the side elements (5,5').

12. A support frame according to any one of Claims 9 to 11, **characterised in that** the cross-members (17 to 22) are arranged between the side elements (5,5').

## Revendications

1. Cadre de support (1) pour des robots (2), en particulier à utiliser dans des domaines d'application critiques pour l'hygiène comme par exemple lors de la manipulation d'aliments, de produits pharmaceutiques, de produits médicaux et/ou de leurs emballages,
étant précisé que le cadre de support (1) est formé à partir d'un profilé de cadre (3) globalement ouvert et au maximum partiellement fermé,
que le cadre de support comporte une construction latérale (4) qui comprend au moins par zones deux éléments latéraux (5, 5') espacés l'un à côté de l'autre,
et que les deux éléments latéraux (5, 5') sont reliés à l'aide de pattes de liaison et/ou d'éclisses (8),
**caractérisé en ce que** les pattes de liaison et/ou les éclisses (8) sont placées dans des creux (11) des éléments latéraux.

2. Cadre de support selon la revendication 1, **caractérisé en ce que** des éléments de fixation (13) sont formés sur les pattes de liaison et/ou les éclisses (8).

3. Cadre de support selon l'une des revendications précédentes, **caractérisé en ce que** des fentes oblongues (32) sont formées dans une patte de liaison (8).

4. Cadre de support selon l'une des revendications précédentes, **caractérisé en ce que** le profilé de cadre (3) présente des arêtes (9) et/ou des surfaces (10) globalement sans reliefs locaux.

5. Cadre de support selon l'une des revendications précédentes, **caractérisé en ce que** globalement toutes les zones plates du profilé de cadre (3) sont inclinées par rapport à l'horizontale ou verticales.

6. Cadre de support selon l'une des revendications précédentes, **caractérisé en ce que** les éléments latéraux (5, 5') comportent des contrefiches (26) et/ou des évidements (6, 7) qui sont disposés à la manière d'un treillis.

7. Cadre de support selon l'une des revendications précédentes, **caractérisé en ce qu'**un évidement (7) de l'élément latéral (5) forme un portique.

8. Cadre de support selon l'une des revendications précédentes, **caractérisé en ce qu'**il est prévu sur au moins un élément latéral (5) au moins une entretoise longitudinale (31).

9. Cadre de support selon l'une des revendications précédentes, **caractérisé en ce que** le cadre de support (1) comprend deux constructions latérales (4) reliées par des entretoises transversales (17).

10. Cadre de support selon la revendication 9, **caractérisé en ce que** les entretoises transversales (17) sont inclinées par rapport à l'horizontale ou sont formées ou disposées à la verticale.

11. Cadre de support selon l'une des revendications 9 à 10, **caractérisé en ce que** les entretoises transversales (19 à 21) sont disposées dans des cavités (23 à 25) formées sur les éléments latéraux (5, 5').

12. Cadre de support selon l'une des revendications 9 à 11, **caractérisé en ce que** les entretoises transversales (17 à 22) sont disposées entre les éléments latéraux (5, 5').
